# EUROPEAN PATENT APPLICATION

(11) **EP 4 187 236 A1**
(43) Date of publication of application: **31.05.2023**
(21) Application number: 21211112.4
(22) Date of filing: 29.11.2021
(51) Int. Cl.: G01N 23/20025, B01D 15/40, G01N 30/84, G01N 30/80

(54) **SAMPLE HOLDER ARRANGEMENT FOR RECEIVING A SUPERCRITICAL FLUID**

(71) Applicant: Merck Patent GmbH, 64293 Darmstadt (DE); Kyushu University, Nishi-ku Fukuoka 819-0395 (JP)
(72) Inventor: KUEHN, Clemens, 64293 Darmstadt (DE); HIERSE, Wolfgang, 64293 Darmstadt (DE); VON ESSEN, Carolina, 64293 Darmstadt (DE); KHUTIA, Anupam, 64293 Darmstadt (DE); KAWATA, Kentaro, Tokyo, 153-8926 (JP); BAMBA, Takeshi, Fukuoka, 819-0395 (JP)
(74) Representative: Merck Serono S.A. Intellectual Property

(57) **Abstract**

The invention provides a sample holder arrangement (1) comprising (i) a collection chamber (100) having an interior space (101), (ii) a sample holding part (3), (iii) an inlet (110), and (iv) an outlet (120); wherein: the inlet (110) is configured for receiving a supercritical fluid (10); the outlet (120) is configured for depressurizing one or more of the interior space (101) and the sample holding part; the sample holding part (3) is detachably configured in the interior space (101); the sample holding part (3) hosts a single crystal of a porous framework (20) such that the single crystal of a porous framework (20) is configured in the interior space (101); and the single crystal of the porous framework (20) is configured in fluid connection with the inlet (110). The single crystal of a porous framework (20) acts as a crystalline sponge used for collecting an analyte extracted by a supercritical fluid (SCF) separation technique, such as SCF chromatography, and carrying out a single crystal X-ray diffraction analysis of the analyte.

## Description

### FIELD OF THE INVENTION

The invention relates to a sample holder arrangement. The invention further relates to a system comprising the sample holder arrangement. The invention further relates to a sample preparation method using the sample holder arrangement. The invention further relates to an X-ray analysis method comprising the sample preparation method. The invention further relates to a use of the sample holder arrangement.

### BACKGROUND OF THE INVENTION

Methods for determining molecular structure of a compound to be analyzed using porous frameworks as well as sample holders for such porous frameworks are known in the art. EP3269849, e.g., describes a single crystal of a porous compound, the single crystal being used to produce a crystal structure analysis sample for a compound to be analyzed by contacting the single crystal of the porous compound having a three-dimensional framework and three-dimensionally regularly-arranged pores and/or hollows formed by being divided by the three-dimensional framework with a solution that includes the compound to be analyzed, and arranging molecules of the compound to be analyzed in a regular array in the pores and/or hollows.

### SUMMARY OF THE INVENTION

Molecule structure elucidation may make use of a crystalline porous network or a crystalline sponge. A crystal suited for single crystal X-ray crystallography may be infused with the molecule to be analyzed and can then be structurally characterized by conventional X-ray crystallography, thus elucidating the structure of the analyte.

The technology may be restricted to pure analytes, therefore the molecule to be analyzed often has to be isolated and purified using chromatographic technics such as liquid chromatography (LC) or gas chromatography (GC). These technics segregate the components of a mixture by their different affinity to a stationary phase resulting in the components to be output from the system after different retention times. However, LC and GC may be limited in the achievable analyte concentrations.

Supercritical fluid chromatography (SFC) is a form of normal phase chromatography that uses a supercritical fluid such as carbon dioxide as the mobile phase. It may be used for the analysis and purification of low to moderate molecular weight, thermally labile molecules and can also be used for the separation of chiral compounds. Principles are similar to those of high performance liquid chromatography (HPLC), however SFC typically utilizes carbon dioxide as the mobile phase. The use of supercritical fluid chromatography may facilitate obtaining much higher analyte concentration in the chromatography and may thus be especially suited for semi-preparative and preparative or even synthetic scale chromatography especially for compounds from biological sources. SFC may be particularly suitable for the separation of unknown structures with the intention of subsequent structure elucidation.

However, a major drawback of SFC may be the high pressure, which has to be maintained to keep the mobile phase in supercritical state. The analytic methods and devices, however, may typically require a lower pressure. Hence, virtually all analytics, except for Mass Spectrometry (MS), need to be executed offline after careful removal of pressure. Upon depressurization, the CO₂ may rapidly gasify which may aerosolize any dissolved analyte in the process. This may result in loss of analyte upon depressurization, effectively reducing the amount available for analytics, which may be particularly disadvantageous for analytes only available in low (relative) quantities, such as may be the case for analytes from biological samples.

Further, the high pressure, as well as the depressurization, may be incompatible with receptacles for the supercritical fluid or with materials for hosting samples for subsequent analyses.

The prior art may describe solid phase trapping approaches with porous phases such as charcoal or silica gel to adsorb analytes to address the problem of possible loss during depressurization. However, such an approach requires subsequent extraction of the solid for further application of the adsorbed analyte to analytical techniques including structure elucidation.

Further, prior art fraction collectors may require substantial effort to prepare an obtained analyte for further analysis, such as for use in a diffractometer, which may be inconvenient for, or even limit, practical applications.

Hence, it is an aspect of the invention to provide an alternative sample holder arrangement, which preferably further at least partly obviates one or more of above-described drawbacks. The present invention may have as object to overcome or ameliorate at least one of the disadvantages of the prior art, or to provide a useful alternative.

Hence, in a first aspect, the invention may provide a sample holder arrangement. The sample holder arrangement may comprise one or more of (i) a collection chamber having an interior space, (ii) a sample holding part, (iii) an inlet, and (iv) an outlet. Especially, the sample holding part may be detachably configured in the interior space. In embodiments, the inlet may be configured for receiving a supercritical fluid, such as a supercritical fluid comprising an analyte, and especially to provide the supercritical fluid to the interior space, such as to the sample holding part. In further embodiments, the outlet may be configured for (isothermally) depressurizing one or more of the interior space and the sample holding part. Especially, the outlet may be configured for releasing a fluid from the interior space to depressurize the interior space and/or the sample holding part. In further embodiments, the sample holding part may host a single crystal of a porous framework, especially such that the single crystal of a porous framework is configured (in the sample holding part) in the interior space. In particular, in embodiments, the single crystal of the porous framework may be configured in fluid connection with the inlet. Hence, when the inlet receives a supercritical fluid, the porous framework may be brought into contact with the supercritical fluid.

The sample holder arrangement of the invention may provide the benefit that the sample holder arrangement can receive a supercritical fluid (comprising an analyte), which supercritical fluid may subsequently be cooled to a liquid in order to soak the single crystal in the sample holding part, thereby providing the analyte to the single crystal, and which liquid may subsequently be gasified by (isothermally) depressurizing the interior space. Thereby, the analyte may be provided to the single crystal from the supercritical fluid with limited loss of analyte, and without damaging the single crystal. In particular, the single crystal of the porous framework as solid phase trap may offer the possibility to trap even small amounts of the analyte in a way that it will not be aerosolized upon pressure relief. The soaked single crystal may also be directly used for subsequent structure elucidation, such as via X-ray analysis.

Hence, the sample holder arrangement may facilitate diffusion of the analyte into the single crystal via reduction of volume of the liquid (or "the medium").

In particular, the invention may provide a specially designed sample holding part (or "vial inset") for use in supercritical fluid chromatography fraction collectors. The vial inset may, in embodiments, resemble a miniaturized test tube with conical bottom which may be equipped with a funnel allowing easy filling. The vial inset dimensions may be adapted to allow to take up the volume associated with a peak in the supercritical fluid chromatography, thus allowing to selectively take up a specific analyte (but as much of that as possible). The vial inset can be equipped with a solid phase for use as adsorbent or absorbent such as one or multiple single crystals of crystalline sponges. The vial inset containing crystalline sponge after chromatography can then be used as sample holding part for X-ray diffraction, avoiding the need to fetch the crystal and mount it on a sample holding part for an X-ray diffractometer, thereby further streamlining the analysis procedure.

Hence, in specific embodiments, the invention may provide a sample holder arrangement comprising (i) a collection chamber having an interior space, (ii) a sample holding part, (iii) an inlet, and (iv) an outlet; wherein: the inlet is configured for receiving a supercritical fluid; the outlet is configured for depressurizing one or more of the interior space and the sample holding part; the sample holding part is detachably configured in the interior space; the sample holding part hosts a single crystal of a porous framework such that the single crystal of a porous framework is configured in the interior space; and the single crystal of the porous framework is configured in fluid connection with the inlet.

Hence, the invention may provide a sample holder arrangement. The sample holder arrangement may in embodiments be configured for preparing a (prepared) sample, especially a prepared sample that may be used in an X-ray analysis method. The prepared sample may be prepared by providing a supercritical fluid comprising an analyte to an interior space of the sample holder arrangement, and successively (i) liquidizing the supercritical fluid to soak a single crystal of a porous framework with a liquid comprising the analyte, and (ii) evaporating the liquid via depressurization of the interior space. Thereby, the analyte (in the supercritical fluid) may be introduced in (the single crystal of) the porous framework, especially thereby providing a prepared sample comprising a doped porous single crystal.

The sample holder arrangement may comprise one or more of a collection chamber having an interior space, (ii) a sample holding part, (iii) an inlet, and (iv) an outlet.

In particular, the inlet may be configured for receiving a supercritical fluid. In particular, the inlet may be configured for receiving the fluid, such as from a supercritical fluid source, and for providing the supercritical fluid to the collection chamber, especially to the interior space (of the collection chamber). Hence, in embodiments, the inlet may be configured to be functionally coupled to a supercritical fluid source, wherein the supercritical fluid source is configured to provide a supercritical fluid, especially a supercritical fluid comprising an analyte, to the inlet. For instance, in embodiments, the supercritical fluid source may comprise a supercritical fluid chromatography device.

In embodiments, the inlet may comprise an inlet valve. In particular, the inlet valve may be configured for controlling the passage of supercritical fluid through the inlet, especially for controlling the entry of the supercritical fluid into the interior space via the inlet.

In further embodiments, the inlet may comprise an inlet tube. The inlet tube may be functionally coupled to the inlet. Especially, the inlet tube may extend into the interior space, especially into the sample holding part. In particular, the inlet, especially the inlet tube, may have an inlet opening arranged in the interior space, especially in the sample holding part. Hence, a supercritical fluid received by the inlet may especially pass through the inlet tube into the interior space.

In embodiments, the sample holder arrangement may comprise the outlet. The outlet may especially be configured for depressurizing the collection chamber, especially for depressurizing the interior space, or especially for depressurizing the sample holding part. In particular, the outlet may be configured for removing a fluid, especially a gas, from the interior space, thereby depressurizing the interior space, especially the sample holding part.

In embodiments, the outlet may comprise an outlet valve. In particular, the outlet valve may be configured for controlling the passage of the fluid through the outlet, especially for controlling the removal of the fluid from the interior space via the outlet.

In further embodiments, the outlet may comprise an outlet tube. The outlet tube may be functionally coupled to the outlet. Especially, the outlet tube may extend into the interior space, such as into the sample holding part. In particular, the outlet, especially the outlet tube, may have an outlet opening arranged in the interior space, especially in the sample holding part. Hence, the fluid may pass through the outlet via the outlet tube to be removed from the interior space.

In embodiments, the sample holder arrangement may comprise the sample holding part. The sample holding part may host a single crystal of a porous framework, especially such that the single crystal of the porous framework is configured (in the sample holding part) in the interior space. In particular, the sample holding part may host the single crystal of the porous framework such that the single crystal of the porous framework is arranged in fluid connection with the inlet, i.e., the single crystal may be arranged in the sample holding part such that the singly crystal is brought into contact with a supercritical fluid entering the interior space via the inlet.

The sample holding part may especially be configured for accommodating the single crystal of a porous framework (herein further also referred to as "crystal", "single porous crystal", "single crystal", "porous crystal", and similar terms, see further below).

The terms "porous single crystal", "the single crystal of the porous framework" and similar terms may herein especially refer to a porous (crystal) compound having a three-dimensional framework and three-dimensionally regularly-arranged pores and/or hollows. The term "single crystal" is especially used indicating that the porous single crystal is especially a monolithic compound. Moreover, the term "(porous) framework" especially refers to a three dimensional framework, especially having three-dimensionally arranged pores. Hence, the term porous crystal of the porous framework may refer to a monolithic porous framework (or compound). In embodiments, the porous single crystal may comprise a crystalline sponge. In further embodiments, the porous single crystal may comprise a porous single crystal as described in EP3269849A1 and/or EP3118610A1, which are hereby herein incorporated by reference.

In embodiments, the porous single crystal, especially (the single crystal of) the porous framework, may comprise a metal-organic framework material. A metal-organic framework material may comprise an organic-inorganic hybrid crystalline porous material comprising an essentially regular array of metal ions (or clusters) surrounded by organic linkers.

The metal-organic framework material may in embodiments be formed of a metal salt ZnX₂, especially where X = Cl or Br or I. In further embodiments, the metal-organic framework material may be tri-pyridinyl triazine (tpt)-based, especially tpt-ZnX₂ based, such as 2 tpt . 3 ZnX₂ based, especially where X comprises an element selected from the group comprising Cl, Br and I. Especially, X = Cl, Br or I. In further embodiments, the metal-organic framework material may comprise a cartridge-based system. In further embodiments, the metal-organic framework material may be tpt-ZnCl₂ based. In further embodiments, the metal-organic framework material may be tpt-ZnBr₂ based. In further embodiments, the metal-organic framework material may be tpt-ZnI₂ based. In further embodiments, ZnX₂, especially tpt-ZnX₂ may comprise two different elements X selected from the group comprising Cl, Br, and I. However, in general, ZnX₂, especially tpt-ZnX₂, may comprise twice the same element selected from the group comprising Cl, Br, and I.

In embodiments, (the single crystal of) the porous framework comprises a metal-organic framework material, wherein the metal-organic framework material is formed of a metal salt ZnX₂ where X = Cl or Br or I.

The term "cartridge-based system" may especially refer to a biporous coordination network. The term "biporous coordination network" and similar terms may herein especially refer to a porous coordination network comprising two (or more) distinct large channels, especially wherein the pores are arranged and surrounded by aromatic structures. Such a biporous coordination network may have the ability to take up two (or more) guests independently, thereby allowing the simultaneous isolation of two different guests. Such biporous materials may be composed of alternatively layered 2,4,6-tris(4-pyridyl)-1,3,5-triazine (TPT) and triphenylene; especially wherein the TPT ligand forms infinite 3D network via coordination to Znh, whereas the triphenylene is especially involved in the 3D framework without forming any covalent or coordination bonds with other components. The noncovalently intercalated triphenylene may contain suitable functional groups without causing any change in the biporous coordination networks.

In particular, the term "biporous coordination networks" may especially refer to the coordination networks described by Ohmori et al., 2005, "a Two-in-One Crystal: Uptake of Two Different Guests into Two Distinct Channels of a Biporous Coordination Network", Angewandte Chemie International Edition, 44, 1962-1964 and/or Kawano et al., 2007, "The Modular Synthesis of Functional Porous coordination Networks", Journal of the American Chemical Society, 129, 15418-15419, which are hereby herein incorporated by reference.

Metal organic frameworks formed of ZnX₂ may be particularly suitable given the flexibility due to interpenetrating networks, the electron deficiency due to TPT ligands, and the possibilities to form weak non-covalent type interactions between the porous single crystal and the analyte.

Alternatively, (the single crystal of) the porous framework may comprise (purely) organic materials. The single crystal may in further embodiments comprise a covalent organic framework (COF). Covalent organic frameworks (COFs) may be constructed from organic building units using strong covalent bonds between light atoms (e.g., H, B, C, N, O, Si).

The single crystal of the porous network may in embodiments comprise a porous, crystalline framework.

In embodiments, the sample holding part may be detachably configured in the interior space. Thereby, a (prepared) sample may be prepared in the sample holding part while in the sample holder arrangement, and the sample holding part may subsequently be removed from the sample holder arrangement for subsequent analyses. In particular, the sample holding part may be compatible with, especially configured for, X-ray analysis. Thereby, the single crystal can remain in the sample holding part while subjecting the single crystal to X-ray analysis. Such embodiments may not only increase analysis convenience, but may also reduce risk of damaging the single crystal by removing the single crystal from the sample holding part.

Hence, in embodiments, the sample holding part may be made of a low X-ray absorption metal or polymer. Further, as the sample holding part may, during use, be exposed to a supercritical fluid, the sample holding part may be made of a material with a high temperature and pressure tolerance. In particular, the material of the sample holding part may be selected in view of one or more of X-ray absorption, pressure tolerance, heat tolerance, transparency, and solvent tolerance (see below), especially at least in view of X-ray absorption, pressure tolerance, and heat tolerance. In particular, transparency may be convenient for arranging the sample holding part for X-ray analysis such that the single crystal is arranged at a target site. However, in embodiments, the single crystal may be held in place in the sample holding part (see below), effectively facilitating arranging the sample holding part appropriately without visually confirming the location of the single crystal. Hence, in embodiments, the sample holding part may comprise a material selected from the group comprising a glass, a low X-ray absorption glass, quartz, aluminum, and a polymeric material, especially a transparent material selected from the group comprising a glass, a low X-ray absorption glass, quartz, and a polymeric material. The polymeric material may especially be selected from the group comprising polyimide, polypropylene, polyethylene, polyvinylidene difluoride, and polytetrafluoroethylene. Hence, in embodiments, the sample holding part may be made of a low X-ray absorption metal or polymer, especially a solvent resistant low X-ray absorption metal or polymer. In further embodiments, the sample holding part may comprise aluminum, such as an aluminum composite. In further embodiments, the sample holding part may comprise a glass. The sample holding part may be configured such that X-ray absorption is limited, especially minimal. The wall thickness of a wall of the sample holding part may be selected depending on the (amount of) X-ray absorption of the material (over the wall thickness). For instance, polymers may typically absorb less at X-ray wavelengths than glasses (having the same wall thickness) and a thicker wall may be selected for such polymers (relative to such glass embodiments). Further, a type of glass for the tube may further be selected for having a relatively low X-ray absorption compared to standard (laboratory) glass (with the same thickness). The (sample holding part) material of the sample holding part may especially comprise a low X-ray absorption glass. The (sample holding part) material may in further embodiments comprise quartz. As indicated above, the sample holding part may, in embodiments, comprise a metal, such as aluminum, which may provide improved mechanical and/or chemical stability. In particular, aluminum may further have a low X-ray absorption. Hence, in embodiments, the sample holding part comprises a material selected from the group comprising a glass, quartz, and a polymeric material, especially a solvent resistant polymer. Examples of polymeric materials that may be used are for instance polyimide, polypropylene (PP), polyethylene (PE), polyvinylidene difluoride (PVDF), polychloro-trifluoro¬ethylene (PCTFE) polymethylpentene (PMP or TPX), and polytetrafluoroethylene (PTFE). Said sample holding part material may in embodiments comprise (a) polyimide. In further embodiments, the tube material comprises PTFE. In yet further embodiments, the material comprises PCTFE. In further embodiments, the material comprises a low X-ray absorption metal such as aluminum. The glass is especially a low X-ray absorption glass. The sample holding part wall may in embodiments essentially consist of the material described above. The term (sample holding part) material may also refer to a plurality of different (sample holding part) materials.

Hence, the sample holding part may comprise a (sample holding part) wall having a wall thickness. In embodiments, the sample holding part, especially the (sample holding part) wall, may have a wall thickness selected from the range of 1-50 µm. In embodiments, the wall thickness may vary over the sample holding part, especially over the length of the sample holding part. In particular, the sample holding part may have an axis of elongation defining the length L1 of the sample holding part. The wall thickness may in embodiments be in the sub micrometer range. Yet, in further embodiments, the wall thickness may be in the micrometer range. In embodiments, the wall thickness may be in the range of 0.1-1000 µm, especially in the range of 1-100 µm, especially 1-50 µm such as 1-20 µm. In further embodiments, the wall thickness may be in the range of 10-50 µm. The length L1 of the sample holding part is especially in the range of 5-40 mm, such as 10-30 mm, especially 10-25 mm. In embodiments, L1 may be in the range of 10-18 mm. In further embodiments, L1 may be in the range of 19-25 mm.

In further embodiments, the sample holding part may be configured for functional coupling with a goniometer base (or goniometer head). In particular, the sample holding part may be configured such that, when functionally coupled to the goniometer base, the single crystal 20 is arranged at predefined distance from (a magnetic base of) the goniometer base, such as at about 19 mm from the goniometer base.

Similarly, the collection chamber may comprise a chamber material selected in view of pressure tolerance, heat tolerance, mechanical stability, and solvent tolerance, especially in view of pressure and heat tolerance. Hence, in embodiments, the sample holding part may comprise one or more of aluminum, such as an aluminum composite, stainless steel, brass, and copper. In particular, in embodiments, the chamber material may be selected in view of X-ray absorption characteristics, particularly the chamber material may be selected for having a low X-ray absorption. Hence, in embodiments, the chamber material may especially comprise aluminum.

As indicated above, the sample holding part may be detachably arranged in the collection chamber. For instance, in embodiments, the collection chamber may comprise securing means for (detachably) securing the sample holding part in the interior space. In further embodiments, the collection chamber may comprise a receptor structure, especially wherein the sample holding part and the receptor structure are configured in a male-female configuration. Thereby, the collection chamber may securely yet detachably host the sample holding part to facilitate both providing an analyte to the single crystal of the porous framework, and subjecting the analyte (in the single crystal) to downstream analysis.

In embodiments, the receptor structure may be an inset or may be provided by walls of the collection chamber. In further embodiments, the receptor structure may be an inset. Thereby, a single collection chamber can be used with a variety of combinations of receptor structures and compatible sample holding parts to tune the sample holder arrangement for specific analytes, particularly in view of available analyte quantities.

The single crystal may thus especially be arranged in the sample holding part in the interior space of the sample holder arrangement in order to receive the analyte. The exact arrangement of the single crystal may be selected in view of several criteria. In particular, it may be advantageous for the single crystal to be arranged closed to the inlet (along a fluid path), especially to an opening of the inlet, such that the single crystal is exposed to a (relatively) high concentration of the analyte. In particular, if the single crystal is arranged at a remote location, the single crystal may be exposed to a diluted concentration of the analyte.

Hence, in embodiments, the sample holder arrangement may have a shortest distance d1 along a fluid path between the inlet, especially an inlet opening of the inlet, and the single crystal of the porous framework. In further embodiments, the shortest distance d1 may be selected from the range of ≤ 25 mm, such as ≤ 10 mm, especially ≤ 5 mm, such as ≤ 2 mm.

In particular, the single crystal may be arranged in front of the inlet, especially in front of the inlet opening, such as in front of the inlet opening of the inlet tube. Hence, in embodiments, the inlet opening may define an inlet axis (perpendicular to the inlet opening), wherein the single crystal of the porous framework is arranged at an angle ≤ 30°, such as ≤ 15° with respect to the inlet opening.

In further embodiments, the sample holder arrangement may be devoid of an obstruction, such as the barrier, between the inlet, especially the inlet opening, and the single crystal of the porous framework.

However, in further embodiments, the single crystal may be (partially) shielded from entering supercritical fluid, for instance to prevent movement of the single crystal due to a (sudden) influx of the supercritical fluid.

For instance, in embodiments, a barrier may be arranged between the inlet, especially the inlet opening, and the single crystal of the porous framework. In particular, the barrier may (locally) fluidically separate the inlet and the single crystal of the porous framework, i.e., the barrier may be (essentially) impermeable for fluid, such as for the supercritical fluid.

In further embodiments, the sample holding part may have a porous structure, especially wherein the single crystal of the porous framework is arranged within the porous structure. In particular, in embodiments, the porous structure may comprise a plurality of pores, especially more than 2 pores. In further embodiments, the single crystal of the porous framework may be configured in fluid connection with the inlet via the pores. In particular, in such embodiments, the supercritical fluid (as well as the liquid and gas; see below) may pass through the pores to reach the single crystal, allowing the single crystal to be soak in the fluid comprising the analyte, while preventing the single crystal from being lost.

Hence, in embodiments, the pore size of pores in the porous structure may be selected based on the size of the single crystal. In particular, the plurality of pores in the porous structure may have a pore size smaller than the single crystal, i.e., a pore size of the porous structure may be selected such as to prevent escape of the single crystal of the porous framework through the porous structure.

In embodiments, the single crystal may in embodiments have a smallest characteristic dimension (or size), especially a smallest circularly equivalent diameter, of at least 0.5 µm, such as at least 1 µm, especially at least 5 µm, such as at least 10 µm, even more especially at least 20 µm. The characteristic dimension (size) may especially be 1 mm, such as 500 µm, at maximum. In embodiments the characteristic dimension (size) of the single crystal is in the range of 1-750 µm, especially in the range of 1-500 µm, such as in the range of 1-250 µm. The largest pore dimension (of the porous structure) may thus, in embodiments, especially be smaller than the maximal characteristic dimension (size) of the single crystal described herein. In embodiments, the largest pore dimension may be ≤ 80 µm, especially ≤ 70 µm, even more especially ≤ 50 µm. In further embodiments, the largest pore dimension may be ≤ 45 µm, especially ≤ 40 µm, even more especially ≤ 35 µm. In further embodiments, the pore size may be selected from the range of 2 - 50 µm, such as from the range of 5 - 40 µm.

Hence, in embodiments, the sample holding part may be configured to host the single crystal and to prevent loss of the single crystal. In particular, a largest opening of the sample holding part may have a largest dimension smaller than the maximal characteristic dimension (size) of the single crystal.

In further embodiments, the sample holding part may be configured to hold the single crystal in place. In particular, in such embodiments, the sample holding part may comprise aluminum.

In embodiments, the sample holding part may be configured between the inlet and the outlet. For instance, in embodiments, in an upright configuration of the sample holder arrangement, the inlet may be arranged below the sample holding part and the outlet may be arranged above the sample holding part. In particular, such configuration may facilitate flushing of the sample holding part (e.g., with an inert gas), and may facilitate providing the supercritical fluid into the container while removing a pre-loading fluid (see below). In particular, in embodiments, the outlet may be arranged downstream along a fluid path from the sample holding part with respect to the inlet.

However, in further embodiments, the inlet and the outlet may be arranged at (essentially) the same side of the sample holding part. For instance, in an upright position of the sample holder arrangement, the inlet and the outlet may both be arranged above the sample holding part. In particular, in embodiments, the inlet and the outlet may be arranged at a first side of the sample holder arrangement.

In further embodiments, the sample holding part may have a holding part opening directed towards the first side of the sample holder arrangement, especially wherein the inlet and the outlet are arranged at the first side. In particular, the holding part opening may define a holding part opening axis (perpendicular to the holding part opening), especially wherein one or more of the inlet and the outlet, especially the inlet, or especially the outlet, are arranged at an angle αₒ relative to the holding part opening axis. In embodiments, αₒ may be selected from the range of 0° - 90°, especially wherein 0°<αₒ<90°, such as 3°≤α≤87°, especially 5°≤αₒ≤85°. In further embodiments αₒ ≤ 80°, especially ≤ 70°, such as ≤ 60°. In further embodiments, the inlet may be arranged at the first side, and the inlet may be arranged at the angle αₒ to the holding part opening axis. In further embodiments, the outlet may be arranged at the first side, and the outlet may be arranged at the angle αₒ to the holding part opening axis.

In a second aspect, the invention may provide a system. The system may comprise one or more of a supercritical fluid source, the sample holder arrangement according to the invention, a temperature control system, and a pressure control system. In embodiments, the supercritical fluid source may be configured to provide in an operational mode of the system a supercritical fluid into the sample holding part (of the sample holder arrangement). In further embodiments, the temperature control system may be configured to control a temperature of the (supercritical fluid in the) collection chamber (of the sample holder arrangement). In further embodiments, the pressure control system may be configured to control a pressure of the (supercritical fluid in the) collection chamber (of the sample holder arrangement.

The system of the invention may provide the benefit that a sample can be prepared in the sample holder arrangement. In particular, the system may be configured to control the temperature and the pressure of the (supercritical fluid in) the sample holder arrangement, especially in the collection chamber, such that an analyte is provided to the single crystal from the supercritical fluid, essentially without damaging the single crystal, and essentially without losing analyte due to aerosolization.

In specific embodiments, the invention may provide a system, wherein the system comprises a supercritical fluid source, the sample holder arrangement according to the invention, a temperature control system, and a pressure control system, wherein the supercritical fluid source is configured to provide in an operational mode of the system a supercritical fluid into the sample holding part, wherein the temperature control system is configured to control a temperature of the collection chamber, and wherein the pressure control system is configured to control a pressure of the collection chamber.

Hence, the invention may provide a system. The system may comprise one or more of a supercritical fluid source, the sample holder arrangement, a temperature control system, and a pressure control system. In embodiments, the temperature control system and the pressure control system may especially be the same system, i.e., a single system may be configured to control the temperature and the pressure of the collection chamber, especially of the interior space.

The system may, in embodiments, comprise the supercritical fluid source. The supercritical fluid source may especially be configured to provide, in an operational mode of the system, a supercritical fluid to the sample holder arrangement, especially into the (interior space of the) collection chamber. In particular, the supercritical fluid source may be functionally coupled to the inlet of the sample holder arrangement.

In further embodiments, the system, especially the supercritical fluid source, may comprise a supercritical fluid chromatography system. the supercritical fluid chromatography system may be configured to subject a primary analyte to supercritical fluid chromatography, thereby providing the supercritical fluid comprising an analyte. In such embodiments, the system, especially the supercritical fluid source, may, in the operational mode, be configured to provide at least part of the supercritical fluid comprising the analyte into the collection chamber, especially into the sample holding part.

In embodiments, the system may comprise the temperature control system. The temperature control system may especially be configured to control a temperature of the sample holding part, especially of the collection chamber. In particular, during the operational mode, the temperature control system may be configured to control a temperature inside the collection chamber, such as of the supercritical fluid.

In further embodiments, the system may comprise the pressure control system. The pressure control system may especially be configured to control a pressure of the sample holding part, especially of the collection chamber. In particular, during the operational mode, the pressure control system may be configured to control a pressure inside the collection chamber, such as of the supercritical fluid. In embodiments, the pressure control system may be functionally coupled to the outlet, especially to the outlet valve. Hence, the pressure control system may especially be configured to control the pressure in the collection chamber by operating the outlet valve.

In embodiments, the system may further comprise an X-ray system, especially wherein the X-ray system is configured to subject the single crystal of the porous framework to single crystal X-ray analysis to provide an X-ray signal. Especially, the system may comprise an X-ray system configured for single-crystal X-ray diffraction (SC-XRD). In further embodiments, the X-ray system may be configured to provide an X-ray signal, especially wherein the X-ray signal comprises structure-related information pertaining to the analyte. In further embodiments, the system, especially the control system, may further comprise a structure prediction system, wherein the structure prediction system is configured to predict the structure of the analyte based on the X-ray signal.

In further embodiments, the supercritical fluid may comprise at least 70 wt% CO₂, especially at least 80 wt.% CO₂, such as at least 90 wt% CO₂. In particular, the supercritical fluid source may be configured to provide the supercritical fluid comprising at least 70 wt% CO₂, especially at least 80 wt.% CO₂, such as at least 90 wt% CO₂.

The properties of the supercritical fluid may be influenced by adding an organic solvent to the supercritical fluid. For instance, the presence of an organic solvent may affect the supercritical fluid chromatography, as described in Berger, "Separation of polar solutes by packed column supercritical fluid chromatography", 1997, Journal of Chromatography, which is hereby incorporated by reference. In particular, the presence of the organic solvent in the supercritical fluid may further provide the benefit that the single crystal may remain in the respective solvent after removal of the supercritical fluid. Thereby, complete removal (dry up) of solvent may be avoided, which may otherwise lead to the crystals breaking (lattice collapsing). Hence, the presence of the solvent may further be beneficial as residual solvent may stabilize the crystals. In embodiments, the supercritical fluid may comprise an organic (non-polar) solvent selected from the group comprising a cycloalkane, such as cyclohexane, an n-alkane, such as n-hexane, and a (fully or partially) halogenated hydrocarbon.

In embodiments, the system may further comprise a flow control system. The flow control system may be configured to control fluid flows into and out of the sample holder arrangement, such as into and out of the collection chamber. Hence, in embodiments, the flow control system may comprise or be functionally coupled to the supercritical fluid source. Similarly, in embodiments, the flow control system may comprise or be functionally coupled to the supercritical fluid chromatography system. In further embodiments, the flow control system may comprise or be functionally coupled to the pressure control system.

In further embodiments, the system may comprise a pre-loading fluid source. The pre-loading fluid source may especially be configured to provide, in an operational mode of the system, a pre-loading fluid to the sample holder arrangement, especially into the (interior space of the) collection chamber. The pre-loading fluid source may especially be functionally coupled to the inlet of the sample holder arrangement. In particular, the system, especially the pre-loading fluid source and the pressure control system may, in the operational mode, be configured to gradually increase the pressure in the interior space by introducing the pre-loading fluid. The pre-loading fluid may especially have (about) the same pressure of the supercritical fluid. In particular, in embodiments, the pre-loading fluid may be a supercritical fluid (but essentially without the analyte). In particular, pre-loading of the interior space with the pre-loading fluid prevent a sudden increase in pressure in the collection chamber upon introduction of the supercritical fluid. The sudden increase in pressure may, if not accounted for, damage, especially break, the single crystal.

In embodiments, the system may comprise a control system. The control system may especially be configured to control one or more of the temperature control system, the pressure control system, and the supercritical fluid source. In further embodiments, the control system may be configured to control the X-ray system. In further embodiments, the control system may be configured to control the supercritical fluid chromatography system. In further embodiments, the control system may be configured to control the structure prediction system. In further embodiments, the control system may be configured to control the flow control system.

The system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operational mode may in embodiments also refer to a system, or apparatus, or device, that can only operate in a single operation mode (i.e. "on", without further tunability).

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one master control system may be a control system and one or more others may be slave control systems.

Hence, in embodiments, the system, especially the control system, may have an operational mode. The operational mode may especially comprise one or more of a loading stage, a cooling stage, a soaking stage, and a depressurization stage.

In embodiments, the operational mode may comprise the loading stage. In the loading stage, the supercritical fluid source may (be configure to) provide the supercritical fluid to the sample holder arrangement, especially to (the interior space of) the collection chamber. In particular, the supercritical fluid source may provide the supercritical fluid comprising an analyte to the sample holder arrangement.

In further embodiments, the operational mode may comprise the cooling stage. In the cooling stage, the temperature control system may (be configured to) decrease the temperature of the collection chamber, especially of the interior space of the collection chamber, or especially of the supercritical fluid in the collection chamber. In particular, the temperature control system may be configured to decrease the temperature to a target temperature, especially wherein the target temperature is lower than a critical temperature of the supercritical fluid. Thereby, the supercritical fluid may be (partially) liquidized to provide a first liquid. Hence, the cooling stage may especially comprise cooling the supercritical fluid (in the collection chamber) to provide a first liquid.

For instance, in embodiments wherein the supercritical fluid comprises CO₂, the target temperature may be ≤ 31 °C, such as ≤ 30°C, especially ≤ 25 °C. In further embodiments, particularly wherein the supercritical fluid comprises CO₂, the target temperature may be ≤20 °C, especially ≤ 10 °C, such as (about) 4 °C. In further embodiments, particularly wherein the supercritical fluid comprises CO₂, the target temperature may be at least -56.6 °C, such as at least -55 °C, especially at least -50 °C. In further embodiments, particularly wherein the supercritical fluid comprises CO₂, the target temperature may be at least -30 °C, such as at least -10 °C, especially at least 0 °C, such as (about) 4 °C.

In embodiments, the cooling stage may comprise reducing the temperature at a rate selected from the range of 0,1 - 50 °C/min, such as at a rate selected from the range of 0,5 - 25 °C/min.

In further embodiments, the operational mode may comprise the soaking stage. In the soaking stage, the system may (be configured to) soak the single crystal of the porous framework, especially in the first liquid. The soaking of the single crystal may especially be to introduce the analyte into the single crystal of the porous framework, especially to provide a doped porous single crystal, i.e., after the soaking (stage), the single crystal may comprise a doped porous single crystal. In particular, the soaking stage may comprise soaking the single crystal during a soaking period. In embodiments the soaking period is at least 10 minutes, such as at least 30 minutes, or at least 1 hour. The soaking period is especially 4 days at maximum, such equal to or less than 3 days, more especially between 10 minutes and 48 hours, especially between 10 minutes and 24 hours, such as 1-24 hours.

In further embodiments, the operational mode may comprise the depressurization stage. In the depressurization stage the pressure control system may (be configured to) decrease the pressure of the collection chamber, especially of the interior space of the collection chamber, to a target pressure. In particular, the pressure control system may (be configured to) decrease the pressure via the outlet, such as by removing a fluid, especially a gas, from the outlet, especially by operating an outlet valve. In embodiments, the target pressure may be lower than a critical pressure of the supercritical fluid, especially lower than a condensation point of the first liquid at the pressure in the collection chamber, such as lower than a condensation point of the first liquid at the target pressure. Thereby, the first liquid may (partially) evaporate to provide a first gas. Hence, the depressurization stage may especially comprise depressurizing the collection chamber, especially to provide a first gas (from the first liquid). In particular, the depressurization stage may comprise reducing the volume of the first liquid resulting in an increased analyte concentration by controlled evaporation. The increased analyte concentration may facilitate soaking of the single crystal. Hence, in embodiments, the soaking stage and the depressurization stage may temporally overlap.

In embodiments, the target pressure may be at most 70 bar, such as at most 60 bar, especially at most 50 bar. In further embodiments, the target pressure may be at most 40 bar, such as at most 30 bar, especially at most 10 bar. In general, in embodiments, the target pressure may be (about) atmospheric pressure.

In further embodiments, the depressurization stage may comprise decreasing the pressure of the collection chamber, especially of the interior space of the collection chamber, to a target pressure selected from the range of 0 - 6 bar above ambient pressure.

In further embodiments, in the depressurization stage the pressure control system may (be configured to) decrease the pressure of the collection chamber, especially of the interior space of the collection chamber, to an intermediate target pressure and, especially after an intermediate target duration, (further) decrease the pressure to a target pressure. In particular, reducing the pressure of the collection chamber to the intermediate target pressure, especially for the target duration, may facilitate liquidizing of the supercritical fluid. In further embodiments, the intermediate target pressure may especially be selected from the range of 3 - 20 bar, such as from the range of 4 - 10 bar, especially (about) 6 bar, which may be (about) the vapor pressure of CO₂ at ambient temperature. In further embodiments, the intermediate target duration may be selected from the range of at least 1 second, such as at least 5 seconds, especially at least 30 seconds. In further embodiments, the intermediate target duration may be selected from the range of at most 1 hour, such as at most 30 minutes, especially at most 10 minutes.

In further embodiments, the intermediate target pressure may be selected from the range of 3 - 9 bar above ambient pressure, especially (about) 6 bar above ambient pressure. In further embodiments, the target pressure may be selected from the range of 0 - 1 bar above ambient pressure, especially (about) ambient pressure.

In particular, in embodiments, the depressurization stage may comprise (essentially) isothermally depressurizing the collection chamber. Isothermal depressurization may provide the benefit that there is no sharp drop in pressure and a slow reduction of solvent volume by evaporation can be accomplished, while maintaining the temperature suitable for incorporating the analyte into the porous single crystal. Hence, in embodiments, in the depressurization stage the temperature control system may (be configured to) control the temperature of the collection chamber, especially of the interior space of the collection chamber, to remain at about the target temperature, especially in the range of 0.9 - 1.1 times the target temperature.

In embodiments, the depressurization stage may comprise reducing the pressure at a rate selected from the range of 0.001 - 300 bar/min, especially from the range of 0.001 - 1 bar/min, such as from the range of 0.001 - 0.1 bar/min, especially from the range of 0.001 - 0.017 bar/min.

The phrases "introduced into the porous single crystal", "introduced in the porous framework", "providing the solvent (comprising the analyte) to the crystal" and similar phrases herein may especially refer to the porous single crystal absorbing the analyte, wherein the analyte is essentially trapped at a binding site (of the framework) of the porous single crystal, especially wherein the analyte is rendered oriented and observable for X-ray analysis (see further below).

Hence, in the operational mode, the system may execute a process for soaking of analyte into the single crystal with supercritical fluid or fluid, which had supercritical properties at or just before the beginning of the soaking process. In particular, the system may execute a process for depressurization after fraction collection in the supercritical fluid chromatography, which may avoid direct transition into gaseous state. Especially first reducing the temperature below critical temperature (Tcrit.) of the fluid before reducing the pressure to below critical pressure (pcrit.) of the fluid. Using this technique, the volume of the collected supercritical fluid fraction will take on the liquid state and thus soaking will commence in liquid rather than supercritical state. In particular, if soaking occurs in the supercritical state, the (sudden) change from SFC to gas at the critical pressure may vaporize the analyte and/or destroy the single crystal.

Hence, in embodiments, the depressurization stage may especially be temporally arranged after the cooling stage.

In embodiments, the operational mode may further comprise a chromatography stage. In the chromatography stage the supercritical fluid chromatography system may (be configured to) subject a primary analyte to supercritical fluid chromatography to provide a supercritical fluid comprising an analyte from the primary analyte. In such embodiments, in the loading stage the supercritical fluid source may especially (be configured to) provide the supercritical fluid comprising the analyte to the sample holder arrangement, especially to (the interior space of) the collection chamber. In particular, the chromatography stage may comprise separating an analyte from a remainder of the primary analyte by supercritical fluid chromatography to provide the supercritical fluid comprising the analyte.

In further embodiments, the operational mode may further comprise a pre-loading stage. In the pre-loading stage the pre-loading fluid source may (be configured to) provide a pre-loading fluid to the interior space of the collection chamber. In particular, the pre-loading fluid may have a pre-loading pressure pL, and the supercritical fluid may have a pressure pS, especially wherein pL is selected from the range of 0.75^{∗}pS - 1.1^{∗}pS, especially from the range of 0.9^{∗}pS - 1.05^{∗}pS, such as from the range of 0.9^{∗}pS - 1^{∗}pS. The pre-loading fluid may especially be added to the interior space to prevent crushing of the crystal from a sudden increase in pressure in the loading stage.

In further embodiments, the operational mode may further comprise an X-ray analysis stage. In the X-ray analysis stage, the X-ray system may (be configured to) subject the single crystal of the porous framework, especially the doped porous single crystal, to single crystal X-ray analysis to provide an X-ray signal.

In further embodiments, the operational mode may comprise an analyte identification stage. In the analyte identification stage the control system may (be configured to) compare the X-ray signal to reference X-ray signals comprising structure-related information pertaining to reference analytes, especially reference molecules. Additionally or alternatively, in the identification stage the control system may (be configured to) determine (or "predict ") a structure of the analyte based on the X-ray signal.

In further embodiments, in the identification stage the control system may (be configured to) compare the X-ray signal to reference X-ray signals comprising structure-related information pertaining to reference organic molecules. The reference X-ray signals may be obtained from a database. Hence, in further embodiments, in the identification stage the control system may (be configured to) compare the X-ray signal to reference X-ray signals from a database, especially wherein the reference X-ray signals comprise structure-related information pertaining to reference analytes, especially reference organic molecules.

The term "stage" and similar terms used herein may refer to a (time) period (also "phase") of a method and/or an operational mode. The different stages may (partially) overlap (in time). For example, the soaking stage may, in general, be initiated prior to the depressurization stage, but may partially overlap in time therewith. However, for example, the cooling stage may typically be completed prior to the depressurization stage. Similarly, the soaking stage may typically be completed prior to the X-ray analysis stage. It will be clear to the person skilled in the art how the stages may be beneficially arranged in time. For example, the soaking stage may occur simultaneously with the cooling stage such that the analyte concentration in the first liquid may be increased during soaking of the single crystal to promote introduction of the analyte into the single crystal.

The primary analyte and/or analyte to be sampled/analyzed may comprise a biological sample, such as (originating from) an extract or a tissue sample. The primary analyte may further comprise a chemical sample, such as a (primary analyte taken from a) product stream or a waste stream of a production process. Especially, the primary analyte may comprise any arbitrary sample comprising an organic molecule. In embodiments, the analyte to be analyzed may comprise an organic molecule. The term "analyte" may especially relate to a molecule to be analyzed or detected, especially a molecule described herein, more especially to an organic molecule described herein. In embodiments, the analyte may comprise an inorganic molecule. The analyte may further comprise a plurality of (different) molecules. However, in general, the analyte may (essentially) comprise a single molecule type, such as a plurality of same molecules, separated from (a remainder of) a primary analyte via supercritical fluid chromatography.

The term "organic molecule" herein may refer to any chemical compound that contains carbon, especially a molecule wherein carbon is covalently linked to other elements such as hydrogen, oxygen and nitrogen. In embodiments, the organic molecule may comprise a biological molecule, especially a biological molecule obtained from a biological source, such as a biological molecule produced by an organism, especially a eukaryote or prokaryote, such as by a plant, animal, fungus, bacterium, or archaeum. In further embodiments, the organic molecule may comprise an active substance (also: "active ingredient" or "active constituent"), especially an active substance with biological activity, i.e., an active substance which has a beneficial and/or adverse effect on living matter, such as an active substance with a pharmaceutical, cosmetical, and/or nutraceutical effect or a salt, acid and/or base thereof. The term "organic molecule" may herein also refer to a plurality of organic molecules.

In embodiments, the analyte, especially the organic molecule, may be selected from the group consisting of an organic biomolecule, i.e., the organic molecule may comprise an organic biomolecule.

The analyte may in embodiments be comprised (especially dissolved) by (in) the supercritical solvent. The supercritical solvent may (essentially) be CO₂.

In embodiments, the system may be configured to execute the sample preparation method and/or the X-ray analysis method of the invention (see below), especially the sample preparation method, or especially the X-ray analysis method.

In a further aspect the invention may provide a sample preparation method for providing a prepared sample using the sample holder arrangement of the invention. The sample preparation method may especially comprise one or more of a loading stage, a cooling stage, a soaking stage, and a depressurization stage.

In embodiments, the sample preparation method may comprise the loading stage. The loading stage may comprise providing the supercritical fluid to the sample holder arrangement, especially to the interior space of the collection chamber.

In further embodiments, the sample preparation method may comprise the cooling stage. The cooling stage may comprise decreasing the temperature of the collection chamber, especially of the interior of the collection chamber, or especially of the supercritical fluid in the collection chamber, to a target temperature to provide a first liquid. The target temperature may especially be lower than a critical temperature of the supercritical fluid.

In further embodiments, the sample preparation method may comprise the soaking stage. The soaking stage may comprise soaking the single crystal of the porous framework, especially in the first liquid. In embodiments, the soaking stage may comprise soaking the single crystal (in the first liquid) during a soaking period, especially wherein the soaking period is at least 10 minutes (also see above).

In further embodiments, the sample preparation method may comprise the depressurization stage. The depressurization stage may comprise (isothermally) decreasing the pressure of the (supercritical fluid in the) collection chamber to a target pressure to provide a first gas. In embodiments, the target pressure may especially be lower than a critical pressure of the first liquid, especially lower than a condensation point of the first liquid. Thereby, the sample preparation method may provide the prepared sample. The prepared sample may especially comprise a doped porous single crystal comprising the analyte. In particular, the prepared sample may comprise the single crystal of the porous framework, wherein an analyte of the primary analyte is arranged in the single crystal of the porous framework, i.e., the single crystal comprises a doped porous single crystal.

In embodiments, the sample preparation method may further comprise a chromatography stage. The chromatography stage may comprise subjecting a primary analyte to supercritical fluid chromatography to provide a supercritical fluid comprising the analyte. In such embodiments, the loading stage may comprise providing the supercritical fluid comprising the analyte to the interior space, especially to the single crystal.

In further embodiments, the sample preparation method may further comprise a pre-loading stage. The pre-loading stage may comprise providing a pre-loading fluid to the interior space of the collection chamber. Especially, the pre-loading fluid may have a pre-loading pressure pL, wherein the supercritical fluid has a pressure pS, and wherein pL is selected from the range of 0.75^{∗}pS - 1.1^{∗}pS, especially from the range of 0.9^{∗}pS - 1.05^{∗}pS, such as from the range of 0.9^{∗}pS - 1^{∗}pS.

In yet a further aspect, the invention provides an X-ray analysis method ("analysis method"). In embodiments, the analysis method comprises the sample preparation method of the invention. In further embodiments, the analysis method further comprises an X-ray stage comprising subjecting the sample to single crystal X-ray analysis to provide an X-ray signal. The sample is especially subjected to single-crystal X-ray diffraction (SC-XRD). Further, especially, the (obtained/provided) X-ray signal comprises structure-related information pertaining to the analyte.

The analysis method may comprise subjecting the doped porous single crystal to single crystal X-ray analysis. In embodiments, the analysis method may comprise subjecting the porous single crystal to single crystal X-ray analysis. The single crystal X-ray analysis may especially comprise single-crystal X-ray diffraction (SC-XRD).

In particular, the analysis method may comprise subjecting the doped porous single crystal to X-ray analysis, wherein the doped porous single crystal is arranged in the sample holding part.

In embodiments, the X-ray analysis method may provide an X-ray signal, wherein the X-ray signal comprises structure-related information pertaining to the analyte, especially to the organic molecule.

In further embodiments, the analysis method may comprise an analyte identification stage. The analyte identification stage may in embodiments comprise comparing the X-ray signal to reference X-ray signals comprising structure-related information pertaining to reference analytes, especially reference molecules. Additionally or alternatively, the identification stage may comprise determining (or "predicting") a structure of the analyte based on the X-ray signal.

In further embodiments, the identification stage may comprise comparing the X-ray signal to reference X-ray signals comprising structure-related information pertaining to reference organic molecules. The reference X-ray signals may be obtained from a database. Hence, in further embodiments, the identification stage may comprise comparing the X-ray signal to reference X-ray signals from a database, especially wherein the reference X-ray signals comprise structure-related information pertaining to reference analytes, especially reference organic molecules.

In embodiments, the X-ray analysis method may comprise a sample providing stage and an analysis stage (and optionally an analyte identification stage), wherein the sample providing stage comprises providing the doped porous single crystal obtainable according to the sample preparation method as described herein, and wherein the analysis stage comprises subjecting the doped porous single crystal to single crystal X-ray analysis.

In a further aspect, the invention may provide a use of the sample holder arrangement according to any one of the claims 1-11 for crystallography.

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

### BRIEF DESCRIPTION OF THE DRAWINGS

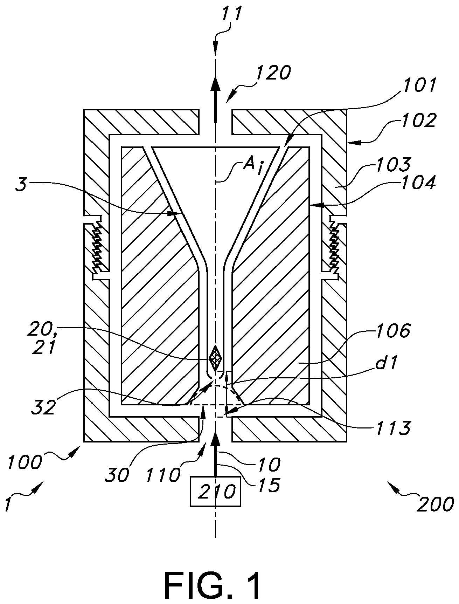

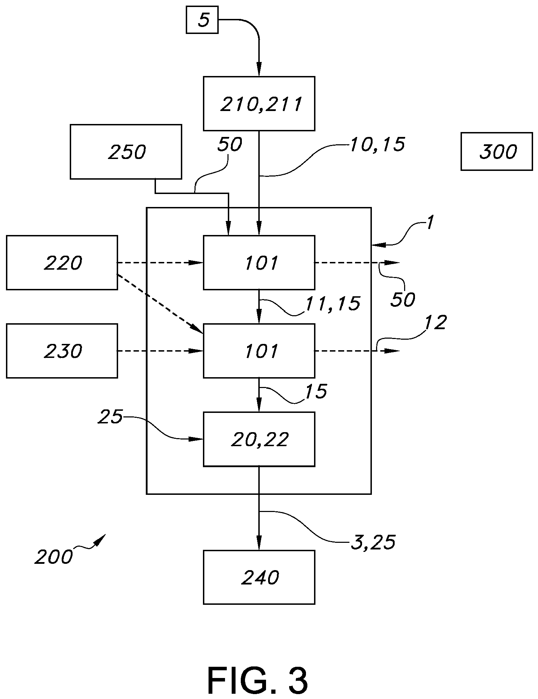

Embodiments of the invention will now be described, by way of example only, with reference to the accompanying schematic drawings in which corresponding reference symbols indicate corresponding parts, and in which: Fig. 1-2 schematically depict embodiments of the sample holder arrangement. Fig. 3 schematically depicts an embodiment of the system and the methods of the invention. The schematic drawings are not necessarily on scale.

### DETAILED DESCRIPTION OF THE EMBODIMENTS

Fig. 1 schematically depicts an embodiment of a sample holder arrangement 1. The sample holder arrangement comprises (i) a collection chamber 100 having an interior space 101, (ii) a sample holding part 3, (iii) an inlet 110, and (iv) an outlet 120. In embodiments, the inlet 110 may be configured for receiving a supercritical fluid 10. Further, in embodiments, the outlet 120 may be configured for (isothermally) depressurizing one or more of the interior space 101 and the sample holding part 3. In particular, the outlet 120 may be configured for releasing a (part of) the supercritical fluid 10, (part of) the first liquid 11 (see below), and/or (part of) a first gas 12 (see below), especially the first gas 12. Further, in the depicted embodiment, the sample holding part 3 is configured between the inlet 110 and the outlet 120.

Hence, the sample holder arrangement 1, especially the collection chamber 100 may be configured for receiving a supercritical fluid, such as CO₂. In particular, the supercritical fluid may have a (relatively) high temperature and pressure. Hence, the sample holder arrangement 1, especially the collection chamber 100 may comprise a material suitable for receiving the supercritical fluid, particularly in view of temperature and pressure. Hence, in embodiments, the collection chamber may comprise a material selected from the group comprising stainless steel, aluminum, brass, and copper. In the depicted embodiment, the collection chamber 100 may comprise an outer wall 102 comprising the material 103. Further, in the depicted embodiment, the collection chamber 100 comprises or is functionally coupled to a receptor structure 104 comprising a receptor structure material 106. In particular, the receptor structure material 106 may also be selected from the group comprising stainless steel, aluminum, brass, and copper.

In embodiments, the sample holding part 3 may be detachably configured in the interior space 101. For instance, in the depicted embodiment, the collection chamber 100 comprises a receptor structure 104, wherein the receptor structure 104 is configured to host the sample holding part 3. In particular, in embodiments, the sample holding part 3 and the receptor structure 104 may be configured in a male-female configuration. In further embodiments, the collection chamber 100 may comprises securing means 105 for (detachably) securing the sample holding part 3 in the interior space 101.

In the depicted embodiment, the sample holding part 3 hosts a single crystal of a porous framework 20 (or "single crystal 20". In particular, the sample holding part 3 is configured such that the single crystal of the porous framework 20 is configured (in the sample holding part 3) in the interior space 101. In particular, the single crystal 20 may be arranged fluidically connected to the inlet 110 and the outlet 120 such that the single crystal 20 comes in contact with a (supercritical) fluid entering the interior space from the inlet.

The single crystal of the porous framework 20 may especially comprise a metal-organic framework material 21, wherein the metal-organic framework material 21 is formed of a metal salt ZnX2 where X = Cl or Br or I.

In the depicted embodiment, the inlet 110 comprises an inlet valve 111. Similarly, in the depicted embodiment, the outlet 120 comprises an outlet valve 121. The inlet valve 111 and the outlet valve 121 may especially respectively control the entry and exit of fluid through the inlet 110 and the outlet 120.

In further embodiments, the inlet 110 may be functionally coupled and/or configured to be functionally coupled to a supercritical fluid source 210. The supercritical fluid source 210 may especially be configured to provide a supercritical fluid 10, especially comprising an analyte 15, to the interior space 101 via the inlet 110.

As described above, it may be advantageous for the single crystal 20 to be located proximal to the inlet 110, especially to an inlet opening 113 of the inlet 110, in view of potential analyte concentration gradients in the interior space. Hence, in the depicted embodiment, a shortest distance d1 along a fluid path between the inlet 110 and the single crystal of the porous framework 20 may be selected from the range of ≤ 25 mm, such as ≤ 10 mm, especially ≤ 2 mm. In particular, in the depicted embodiment, the inlet 110 defines an inlet axis Aᵢ (perpendicular to an inlet opening), wherein the single crystal of the porous framework 20 is arranged at an angle ≤ 15° with respect to the inlet axis Aᵢ.

In particular, in such embodiments, it may be desirable for the single crystal 20 to be kept in place by the sample holding part 3 as the single crystal 20 may be exposed to the flow of a fluid entering the interior space 101. Hence, in embodiments, the sample holding part 3 may comprise an opening 32. The opening 32 may especially be configured to provide a fluid contact between the single crystal 20 and the inlet 110. For instance, in embodiments, the sample holding part 3 may have a porous structure, wherein the single crystal of the porous framework 20 is arranged within the porous structure. Especially, the porous structure may provide the opening 32. In particular, a pore size of the porous structure may be selected such as to prevent escape of the single crystal 20 through the porous structure. In embodiments, the porous structure may comprise a plurality of pores, and the single crystal of the porous framework 20 may be configured in fluid connection with the inlet 110 via the pores.

However, in the absence of a structure maintaining the single crystal 20 in place in the sample holding part 3, it may be preferable to have the single crystal 20 arranged remote from the inlet 110 with respect to a fluid path. Hence in embodiments, a barrier 30 may be arranged between the inlet 110 and the single crystal of the porous framework 20, especially wherein the barrier 30 (locally) fluidically separates the inlet 110 and the single crystal of the porous framework 20. In Fig. 1, the optional/alternative barrier 30 is schematically depicted with a hyphened line.

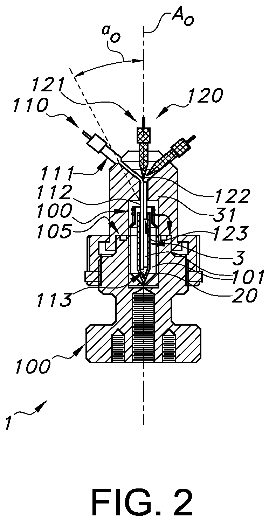

Fig. 2 schematically depicts a further embodiment of a sample holder arrangement 1 according to the invention. In the depicted embodiment, the sample holding part 3 comprises a holding part opening 31 directed towards a first side 6 of the sample holder arrangement 1, wherein the inlet 110 and the outlet 120 are arranged at the first side 6. In particular, the holding part opening 31 may define a holding part opening axis Aₒ (perpendicular to the holding part opening), wherein one or more of the inlet 110 and the outlet 120 are arranged at an angle αₒ relative to the opening axis Aₒ, wherein αₒ is selected from the range of 0° - 60°. In particular, in the depicted embodiment, the outlet may (essentially) be arranged at an angle αₒ of 0°, whereas the inlet may be arranged at an angle αₒ between 10° - 20°.

Further, in the depicted embodiment, the sample holder arrangement 1 comprises an inlet tube 112 and an outlet tube 122. In particular, the inlet tube 112 is functionally coupled to the inlet 110 and extends into the sample holding part 3. The inlet tube 112 may especially be configured to provide a fluid, such as the supercritical fluid 10, from the inlet 110 to an inlet opening 113 of the inlet tube 112.

Similarly, the outlet tube 122 may be functionally coupled to the outlet 120 and may extend into the interior space 101, especially into the sample holding part 3. The outlet tube 122 may especially be configured for the removal of a fluid from the interior space 101 to lower the pressure inside of the interior space 101. In particular, the outlet tube 122 may comprise an outlet opening 123 arranged inside the interior space 101, wherein the outlet 120 may be configured to provide a fluid from the outlet opening 123 to outside of the interior space 101 via the outlet tube 122.

Fig. 3 schematically depicts an embodiment of the system 200. In particular, in the depicted embodiment, the system comprises a supercritical fluid source 210, the sample holder arrangement 1 according to the invention, a temperature control system 220, and a pressure control system 230. In particular, in an operational mode of the system, the supercritical fluid source 210 may be configured to provide a supercritical fluid 10 (comprising an analyte 15) into the sample holding part 3. Further, in embodiments, the temperature control system 220 may be configured to control a temperature of the (supercritical fluid 10 in the) collection chamber 100, especially of the interior space 101. Similarly, in embodiments, the pressure control system 230 may be configured to control a pressure of the collection chamber 100, especially of the interior space 101.

In the depicted embodiment, the system 200, especially the supercritical fluid source 210, further comprises a supercritical fluid chromatography system 211, wherein the supercritical fluid chromatography system 211 is configured to subject a primary analyte 5 to supercritical fluid chromatography, thereby providing the supercritical fluid 10 comprising an analyte 15. In particular, the system 200, especially the supercritical fluid source 210, may be configured to provide at least part of the supercritical fluid 10 comprising the analyte 5 into the sample holding part 3.

In the depicted embodiment, the system further comprises an X-ray system 240, wherein the X-ray system 240 is configured to subject the single crystal of the porous framework 20 to single crystal X-ray analysis to provide an X-ray signal.

In particular, Fig. 3 also schematically depicts an operational mode of embodiments of the system 200. In such embodiments, the system 200 may comprise a control system 300, wherein the system 200, especially the control system 300 has an operational mode comprising a loading stage, a cooling stage, a soaking stage, and a depressurization stage. In the depicted embodiment, the operational mode may further comprise a chromatography stage and an x-ray analysis stage.

The chromatography stage may comprise the supercritical fluid chromatography system 211 subjecting a primary analyte 5 to supercritical fluid chromatography to provide a supercritical fluid 10 comprising at least part of the primary analyte 5, such as a supercritical fluid 10 comprising the analyte 15. In particular, the chromatography stage may comprise separating the analyte 15 from a remainder of the primary analyte 5 by supercritical fluid chromatography, wherein the supercritical fluid 10 comprises the analyte 15.

The loading stage may comprise the supercritical fluid source 210 providing the supercritical fluid 10 to the interior space 101 of the sample holder arrangement 1.

The cooling stage may comprise the temperature control system 220 decreasing the temperature of the (supercritical fluid 10 in the) collection chamber 100 to a target temperature lower than a critical temperature of the supercritical fluid 10. Thereby, (at least part of) the supercritical fluid may undergo a phase transition to provide a first liquid 11, wherein the first liquid 11 comprises (at least part of) the analyte 15.

The soaking stage may comprise soaking the single crystal of the porous framework 20 (in the first liquid 11), especially during a soaking period. For instance, in embodiments, the soaking period may be at least 10 m, such as at least 30 m, especially at least 1 hr.

The depressurization stage may comprise the pressure control system 230 (isothermally) decreasing the pressure of the collection chamber 100, especially of the interior space, to a target pressure lower than a condensation pressure (at the target temperature) of the supercritical fluid 10. Due to the decrease in pressure, the supercritical fluid 10 and/or the first liquid 11 may undergo a phase transition to a first gas 12, which may, for instance, exit the interior space 101 via the outlet 120.

In embodiment, in the depressurization stage, the temperature control system 220 may be configured to maintain the temperature in the interior space 101 at about the target temperature, such as within 10% of the target temperature, especially within 5%, such as within 3%.

The X-ray analysis stage may comprise the X-ray system 240 subjecting the single crystal of the porous framework 20 to single crystal X-ray analysis to provide an X-ray signal.

In particular, the system 200 may be configured to provide the sample holding part 3 comprising a prepared sample 25 to the X-ray system 240. In particular, the prepared sample may comprise the single crystal 20 hosting the analyte 5, i.e., the single crystal 20 in the prepared sample 25 may comprise a doped porous single crystal.

The sample holding part 3 may thus especially be suitable for X-ray analysis of the hosted single crystal 20. Hence, in embodiments, the sample holding part 3 may comprise a material selected from the group comprising a glass, a low X-ray absorption glass, quartz, and a polymeric material. In further embodiments, the sample holding part 3 may comprise a polymeric material selected from the group comprising polyimide, polypropylene, polyethylene, polyvinylidene difluoride, and polytetrafluoroethylene.

In further embodiments, the operational mode may further comprise a pre-loading stage. The pre-loading stage may especially comprise a pre-loading fluid source 250 providing a pre-loading fluid 50 to the interior space 101 of the collection chamber 100, especially wherein the pre-loading fluid 50 has a pre-loading pressure pL, and wherein the supercritical fluid 10 has a pressure pS, wherein pL is selected from the range of 0.9^{∗}pS - 1.05^{∗}pS.

Fig. 3 further schematically depicts an embodiment of the sample preparation method for providing a prepared sample 25. In particular, in the depicted embodiment, the sample preparation method comprises chromatography stage, a loading stage, a cooling stage, a soaking stage, and a depressurization stage.

The chromatography stage comprises subjecting a primary analyte 5 to supercritical fluid chromatography to provide a supercritical fluid 10 comprising an analyte 15 (from the primary analyte 5). In particular, the primary analyte 5 may comprise a plurality of compounds, and the chromatography stage may comprise separating the analyte 15 from other compounds of the primary analyte 5.

The loading stage may comprising providing the supercritical fluid 10 to the interior space 101 of the sample holder arrangement 1, especially via an inlet 110 of the sample holder arrangement 1.

The cooling stage may comprise decreasing the temperature of the (supercritical fluid 10 in the) collection chamber 100 to a target temperature lower than a critical temperature of the supercritical fluid 10, thereby especially providing a first liquid 11. The first liquid 11 may especially be in contact with the single crystal 20.

The soaking stage may comprise soaking the single crystal of the porous framework 20 (in the first liquid 11), thereby introducing the analyte 15 into the single crystal 20. In particular, the soaking stage may comprise soaking the single crystal during a soaking period, such as during a soaking period of at least 10 m.

The depressurization stage may comprise (isothermally) decreasing the pressure of the collection chamber 100, especially of the interior space 101 of the collection chamber 100, to a target pressure lower than a condensation pressure (at the target temperature) of the supercritical fluid 10. In particular, the depressurization stage may comprise removing a fluid from the interior space 101 via the outlet 120. Thereby, (at least part of) the supercritical fluid 10 and/or the first liquid 11 may be converted to a first gas 12, which may leave the interior space 101 via the outlet 120.

Thereby, the sample preparation method may provide the prepared sample 25. The prepared sample 25 may comprise the single crystal of the porous framework 20, especially wherein an analyte 15 of the primary analyte 5 is arranged in the single crystal of the porous framework 20.

In embodiments, the sample preparation method may further comprise a pre-loading stage comprising providing a pre-loading fluid 50 to the interior space 101 of the collection chamber 100, especially wherein the pre-loading fluid 50 has a pre-loading pressure pL, and wherein the supercritical fluid 10 has a pressure pS, and especially wherein pL is selected from the range of 0.9^{∗}pS - 1.05^{∗}pS.

Fig. 3 further schematically depicts an embodiment of the X-ray analysis method. The X-ray analysis method may especially comprise the sample preparation method of the invention and an X-ray analysis stage comprising subjecting the prepared sample 25 to single crystal X-ray analysis to provide an X-ray signal.

Fig. 3 further schematically depicts a use of the sample holder arrangement 1 for crystallography.

The term "plurality" refers to two or more. Furthermore, the terms "a plurality of' and "a number of' may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method, respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sample holder arrangement (1) comprising (i) a collection chamber (100) having an interior space (101), (ii) a sample holding part (3), (iii) an inlet (110), and (iv) an outlet (120); wherein:
- the inlet (110) is configured for receiving a supercritical fluid (10);
- the outlet (120) is configured for depressurizing one or more of the interior space (101) and the sample holding part;
- the sample holding part (3) is detachably configured in the interior space (101);
- the sample holding part (3) hosts a single crystal of a porous framework (20) such that the single crystal of a porous framework (20) is in the interior space (101); and
- the single crystal of the porous framework (20) is configured in fluid connection with the inlet (110).

2. The sample holder arrangement (1) according to claim 1, wherein a shortest distance d1 along a fluid path between the inlet (110) and the single crystal of the porous framework (20) is selected from the range of ≤ 2 mm.

3. The sample holder arrangement (1) according to any one of the preceding claims, wherein a barrier (30) is arranged between the inlet (110) and the single crystal of the porous framework (20), wherein the barrier (30) fluidically separates the inlet (110) and the single crystal of the porous framework (20).

4. The sample holder arrangement (1) according to any one of the preceding claims, wherein the sample holding part (3) comprises an opening (31) directed towards a first side (6) of the sample holder arrangement (1), wherein the inlet (110) and the outlet (120) are arranged at the first side (6), wherein the opening (31) defines an opening axis (Aₒ), and wherein one or more of the inlet (110) and the outlet (120) are arranged at an angle αₒ relative to the opening axis (Aₒ), wherein 0° ≤ αₒ ≤ 90°.

5. The sample holder arrangement (1) according to any one of the preceding claims, wherein the sample holding part (3) has a porous structure, wherein the single crystal of the porous framework (20) is arranged within the porous structure, wherein the porous structure comprises more than 2 pores, and wherein the single crystal of the porous framework (20) is configured in fluid connection with the inlet (110) via the pores, and wherein the sample holding part (3) is configured between the inlet (110) and the outlet (120).

6. The sample holder arrangement (1) according to any one of the preceding claims, wherein the sample holder arrangement (1) comprises:
- an inlet tube (112), wherein the inlet tube (112) is functionally coupled to the inlet (110), wherein the inlet tube (112) extends into the sample holding part (3); and
- an outlet tube (122), wherein the outlet tube (112) is functionally coupled to the outlet (120), and wherein the outlet tube extends into the interior space (101).

7. The sample holder arrangement (1) according to any one of the preceding claims, wherein the sample holding part (3) comprises a material selected from the group comprising a glass, a low X-ray absorption glass, quartz, and a polymeric material, wherein the polymeric material is selected from the group comprising polyimide, polypropylene, polyethylene, polyvinylidene difluoride, and polytetrafluoroethylene, and wherein the collection chamber comprises a material selected from the group comprising stainless steel, aluminum, brass, and copper.

8. The sample holder arrangement (1) according to any one of the preceding claims, wherein the single crystal of the porous framework (20) comprises a metal-organic framework material (21), wherein the metal-organic framework material is formed of a metal salt ZnX₂ where X = Cl or Br or I.

9. The sample holder arrangement (1) according to any one of the preceding claims, wherein the collection chamber (100) comprises a receptor structure (104), wherein the sample holding part (3) and the receptor structure (104) are configured in a male-female configuration.

10. A system (200), wherein the system comprises a supercritical fluid source (210), the sample holder arrangement (1) according to any one of the preceding claims, a temperature control system (220), and a pressure control system (230), wherein the supercritical fluid source (210) is configured to provide in an operational mode of the system (200) a supercritical fluid (10) into the sample holding part (3), wherein the temperature control system (220) is configured to control a temperature of the collection chamber (100), and wherein the pressure control system (230) is configured to control a pressure of the collection chamber (100).

11. The system (200) according to claim 10, comprising a supercritical fluid chromatography system (211), wherein the supercritical fluid chromatography system (211) is configured to subject a primary analyte (5) to supercritical fluid chromatography, thereby providing the supercritical fluid (10) comprising an analyte, wherein the system (200) is configured to provide at least part of the supercritical fluid (10) comprising the analyte (15) into the sample holding part (3).

12. The system (200) according to any one of the preceding claims 10-11, wherein the system (200) further comprises an X-ray system (240), wherein the X-ray system (240) is configured to subject the single crystal of the porous framework (20) to single crystal X-ray analysis to provide an X-ray signal, wherein the supercritical fluid (10) comprises at least 80 wt.% CO₂, and wherein the supercritical fluid comprises an organic solvent selected from the group comprising a cycloalkane, an n-alkane, and a halogenated hydrocarbon, and wherein the system (200) comprises a control system (300), and wherein the system (200) has an operational mode comprising:
- a loading stage comprising the supercritical fluid source (210) providing the supercritical fluid (10) to the interior space (101) of the sample holder arrangement (1);
- a cooling stage comprising the temperature control system (220) decreasing the temperature of the collection chamber (100) to a target temperature lower than a critical temperature of the supercritical fluid (10);
- a soaking stage comprising soaking the single crystal of the porous framework (20);
- a depressurization stage comprising the pressure control system (230) decreasing the pressure of the collection chamber (100) to a target pressure lower than a critical pressure of the supercritical fluid (10).

13. A sample preparation method for providing a prepared sample (25) using the sample holder arrangement (1) of any one of claims 1-9, the sample preparation method comprising:
- a loading stage comprising providing the supercritical fluid (10) to the interior space (101) of the sample holder arrangement (1);
- a cooling stage comprising decreasing the temperature of the collection chamber (100) to a target temperature lower than a critical temperature of the supercritical fluid (10);
- a soaking stage comprising soaking the single crystal of the porous framework (20);
- a depressurization stage comprising decreasing the pressure of the collection chamber (100) to a target pressure lower than a critical pressure of the supercritical fluid (10); thereby providing the prepared sample (25).

14. An X-ray analysis method, wherein the X-ray analysis method comprises:
- the sample preparation method according to claim 13;
- an X-ray analysis stage comprising subjecting the prepared sample (25) to single crystal X-ray analysis to provide an X-ray signal.

15. Use of the sample holder arrangement (1) according to any one of the claims 1-9 for crystallography.
